# EUROPÄISCHE PATENTSCHRIFT

(11) **EP 2 177 293 B1**
(45) Veröffentlichungstag und Bekanntmachung des Hinweises auf die Patenterteilung: **02.01.2013**
(21) Anmeldenummer: 08018193.6
(22) Anmeldetag: 17.10.2008
(51) Int. Cl.: B21D 45/02, B26D 7/18, B21D 28/00, B23Q 1/68, B23Q 7/00, B21D 24/02, B23K 26/08

(54) **Verfahren zum Entnehmen eines Werkstückteils und Werkzeugmaschine**
Machine tool and method for removing a workpiece part
Procédé d'extraction d'une partie d'une pièce à usiner et machine-outil

(43) Veröffentlichungstag der Anmeldung: 21.04.2010
(73) Patentinhaber: TRUMPF Werkzeugmaschinen GmbH + Co. KG, 71254 Ditzingen (DE)
(72) Erfinder: Büttner, Stefan, 71706 Markgröningen (DE)
(74) Vertreter: Kohler Schmid Möbus

(56) Entgegenhaltungen:
- EP-A- 0 919 320
- EP-A- 1 340 584
- EP-A- 1 935 526
- WO-A-91/17005
- DE-A1- 19 616 204
- US-A- 6 055 895

## Beschreibung

Die vorliegende Erfindung betrifft ein Verfahren zum Entnehmen eines durch trennendes Bearbeiten an einem plattenartigen, auf einer Werkstückauflage einer Werkzeugmaschine aufliegenden Werkstück gebildeten Werkstückteils aus einem Restwerkstück. Die Erfindung betrifft auch eine Werkzeugmaschine, umfassend: eine Werkstückauflage zur Auflage eines plattenartigen Werkstücks, sowie eine ortsfeste Bearbeitungseinrichtung zur Trennung des Werkstücks in ein Werkstückteil und ein Restwerkstück.

Das manuelle oder automatisierte Entnehmen von beim trennenden Bearbeiten, insbesondere beim Stanzen oder (Laser-)schneiden, freigestanzten bzw. freigeschnittenen Werkstückteilen aus dem hierbei gebildeten Restwerkstück ist schwierig, da sich das Werkstückteil und das Restwerkstück in der Regel in einer gemeinsamen, durch die Werkstückauflage gebildeten Ebene befinden und nur durch einen schmalen Trennschnitt, der in der Regel weniger als 5 mm breit ist, voneinander getrennt sind, so dass es beim Entladen zum Verkanten des Werkstückteils am Restwerkstück kommen kann. Dies kann zu einer Unterbrechung der Produktion, d.h. zu Ausfallzeiten der Werkzeugmaschine, sowie ggf. zu einer Beschädigung des zu entnehmenden Werkstückteils führen, wenn dieses teilweise am Restwerkstück (im Folgenden auch als Restgitter bezeichnet) hängen bleibt. Beim automatisierten Entnehmen kann zusätzlich die für die Entnahme verwendete Entnahmeeinrichtung bzw. die Werkzeugmaschine beschädigt werden, wenn die Entnahmeeinrichtung versucht, das Werkstückteil zu entnehmen, obwohl dieses am Restgitter hängen bleibt bzw. sich dort verhakt. Um eine solche Beschädigung zu vermeiden, kann beim automatisierten Entnehmen eine Überwachungseinrichtung zur Überwachung des Entladevorgangs eingesetzt werden, die das Entladen unterbricht, wenn eine Verhakung des Werkstückteils mit dem Restwerkstück erkannt wird. Eine solche Überwachung dient jedoch lediglich der Schadensbegrenzung, nicht jedoch der Bekämpfung der Ursache des Problems, nämlich des Verhakens des Werkstückteils am Restgitter.

Zum prozesssicheren automatisierten Entnehmen ist es beispielsweise bekannt, Magnete einzusetzen, um das Werkstückteil (Blech) aus dem Restwerkstück zu heben. Dieses Vorgehen ist jedoch bei nicht bzw. nur schwach magnetischen Materialien wie Aluminium oder rostfreiem Stahl nur eingeschränkt möglich. Daher werden häufig mechanische Werkzeuge (Schraubenzieher oder ähnliches) zum Entnehmen eingesetzt, um insbesondere große und schwere Werkstückteile anzuheben, was ggf. mit erheblichem Zeitaufwand verbunden ist, da die Werkstückteile insbesondere in Pratzennähe nur schwer zu erreichen sind. Durch die ergonomisch schwierige Entnahmesituation dauert der Entnahmevorgang länger als eigentlich notwendig, geht daher zu Lasten der Produktivität und ist nicht prozesssicher.

Aus der EP 1 340 584 A1 ist eine Maschine zum thermischen Schneiden von Werkstücken bekannt geworden, die eine Werkstückauflage mit Auflageelementen zur Unterstützung des Werkstücks sowie eine bewegliche Schneideinrichtung aufweist, um das Werkstück an unterschiedlichen Stellen trennend zu bearbeiten. An der Werkstückauflage sind separate erste und zweite Auflageelemente vorgesehen, die jeweils zur einstellbaren Unterstützung des Werkstückteils bzw. des Restwerkstücks dienen und im Bereich des bei der Bewegung der Schneideinrichtung gebildeten Trennschnitts voneinander beabstandet angeordnet sind. Die ersten und zweiten Auflageelemente können hierbei höhenverstellbar sein und eine erste und zweite Auflageebene ausbilden, die jeweils dem Werkstückteil bzw. dem Restwerkstück zugeordnet sind, um die Entnahme von der jeweiligen Auflageebene zu erleichtern. Das Werkstückteil bzw. das Restwerkstück liegen nach dem trennenden Bearbeiten auf den Auflageelementen in der jeweiligen Auflageebene auf und können von diesen manuell oder mit Hilfe von Saugern (Saugrahmen) entnommen werden.

Aus der DE 196 16 204 A1 eine Aufhebevorrichtung, welche von einer Schneidevorrichtung zuggeschnittene Teile aufhebt.

### Aufgabe der Erfindung

Es ist die Aufgabe der vorliegenden Erfindung, ein Verfahren zum Entnehmen eines Werkstückteils und eine Werkzeugmaschine bereitzustellen, mit denen auf einfache Weise eine prozesssichere Entnahme von Werkstückteilen aus einem Restwerkstück ermöglicht wird.

### Gegenstand der Erfindung

Diese Aufgabe wird erfindungsgemäß gelöst durch ein Verfahren gemäß Ansprüchs 1.

Erfindungsgemäß umfasst das Verfahren weiterhin:

Positionieren des Werkstückteils auf dem Auflageelement in einem vorhergehenden Schritt durch Verschieben der Werkstückauflage und/oder des Werkstückteils auf der Werkstückauflage gemeinsam mit dem Restwerkstück. Das Auflageelement ist typischer Weise nicht in der Ebene der Werkstückauflage (XY-Ebene) beweglich, so dass das Werkstückteil nach dem trennenden Bearbeiten in der Regel zunächst in einer Aulflageposition verbracht werden muss, in der das Werkstückteil die Auflagefläche(n) des/der angehobenen Auflageelemente möglichst vollständig überdeckt, da ansonsten ein Anheben des Auflageelements in der Regel auch ein Anheben des Restwerkstücks zur Folge hat. Die Verschiebung des Werkstückteils und des Restwerkstücks auf der Werkstückauflage kann hierbei durch an der Werkstückauflage angebrachte Gleitrollen erleichtert werden.

Erfindungsgemäss wird das Auflageelement an einer ortsfesten Bearbeitungsposition der Werkstückauflage gebildet. An der Bearbeitungsposition ist ein Bearbeitungswerkzeug z.B. in Form eines Bearbeitungslasers oder eines Stanzwerkzeugs angeordnet, das über einer Bearbeitungsöffnung positioniert ist, die z.B. dem Durchtritt eines Laserstrahls auf einen Strahlfänger oder dem Eingriff eines Stanzstempels dienen kann. Das Auflageelement kann hierbei als Öffnungsbegrenzung für die Bearbeitungsöffnung ausgebildet sein. Die Anordnung des Auflageelements an der ortsfesten Bearbeitungsposition bietet den Vorteil, dass nach dem trennenden Bearbeiten nur geringe Verfahrwege des Werkstückteils erforderlich sind, um dieses auf dem Auflageelement zu positionieren. Es versteht sich, dass alternativ oder zusätzlich auch Auflageelemente an anderen Orten der Werkstückauflage gebildet werden können.

In einer vorteilhaften Variante wird das Auflageelement von einer Stanzmatrize oder einer Lasermatrize der Werkzeugmaschine gebildet, die an der Bearbeitungsposition angeordnet ist. Die in der Regel auswechselbare Stanzmatrize kann hierbei an einer höhenverstellbaren Matrizenhalterung angebracht sein. Auch die Lasermatrize kann mittels eines geeigneten z.B. hydraulischen Antriebs in der Höhe verstellbar ausgebildet werden. Sowohl die Lasermatrize als auch die Stanzmatrize müssen hierbei über die Null-Lage an der Werkstückauflage hinaus höhenverstellbar sein.

In einer bevorzugten Variante erfolgt das Anheben des Werkstückteils in die Entnahmeposition wahlweise mit einer Linearbewegung oder mit einer Kippbewegung. Das Auflageelement kann eine flächige Auflage bilden, an dem das plattenförmige Werkstückteil zumindest im Bereich seines Schwerpunkts unterstützt wird, so dass das Werkstück in einer Linearbewegung parallel zur Werkstückauflage angehoben werden kann, was insbesondere bei großen Blechdicken gegenüber einer Kippbewegung bevorzugt ist. Alternativ ist es insbesondere bei geringeren Blechdicken auch möglich, das Werkstückteil mit dem Auflageelement lediglich in einem Randbereich anzuheben, so dass das Werkstückteil beim Anheben eine Kippbewegung ausführt. Die Entscheidung, ob das Anheben mit einer Kipp- oder Linearbewegung durchgeführt wird, kann in Abhängigkeit von der Werkstückdicke und der Geometrie des zu entnehmenden Wersktückteils erfolgen, wobei für die Kippbewegung ggf. ein trennendes Bearbeiten in einem speziellen Bearbeitungsmodus erforderlich ist (s.u.). In beiden Fällen kann das Werkstückteil in der Entnahmeposition manuell oder automatisiert leichter entnommen werden, da dieses nicht mehr in einer gemeinsamen Ebene mit dem Restwerkstück auf der Werkstückauflage angeordnet ist.

Bevorzugt verbleiben beim trennenden Bearbeiten Verbindungsstege zwischen Werkstückteil und Restwerkstück, von denen mindestens einer beim Anheben des Werkstückteils durchbrochen wird. Das Entnehmen von Werkstückteilen, die über Verbindungsstege mit dem Restwerkstück verbunden bleiben, die aufgrund ihrer geringen Breite auch als "Micro-Joints" bezeichnet werden, kann in vorteilhafter Weise dadurch erfolgen, dass einer oder mehrere dieser Verbindungsstege beim Anheben des Auflageelements durchbrochen werden. Dies ist günstiger als das herkömmliche Vorgehen beim Entnehmen von mit dem Restgitter verbundenen Werkstückteilen, bei dem durch eine Hin- und Herbewegung die Verbindungsstege gebrochen und die Werkstückteile aus dem Restgitter herausgeschüttelt werden, da hierbei die Werkstückteile und das Restgitter aufeinander fallen und die Werkstückteile an der Oberfläche beschädigt werden können. Zusätzlich erfolgt das Verschieben des freigeschnittenen Werkstückteils im Restwerkstück auf die Hebeeinrichtung prozesssicher.

In einer weiteren vorteilhaften Variante wird das Werkstückteil beim Anheben um eine Kippachse verkippt, die entlang eines oder mehrerer beim trennenden Bearbeiten zwischen Werkstückteil und Restwerkstück verbleibenden Verbindungsstegen verläuft. In diesem Fall kann das Werkstückteil an einer Seite angehoben und an der gegenüberliegenden Seite an den Verbindungsstegen nach oben gebogen werden. Das Werkstückteil steht hierbei mit dem angehobenen Randbereich aus dem Restwerkstück heraus und wird nachfolgend manuell oder automatisiert entnommen.

In einer besonders vorteilhaften Variante wird das Werkstückteil während des Anhebens mittels eines Gegenhalters auf dem Auflageelement gehalten, insbesondere mittels einer Saugeinrichtung oder mittels einer an der Bearbeitungsposition vorgesehenen, höhenverstellbaren Fixiereinrichtung, insbesondere mittels eines Stanzkopfs,. Die Saugeinrichtung kann hierbei das auf dem Auflageelement aufliegende Werkstückteil ansaugen und synchron mit dem Auflageelement in die Entnahmeposition angehoben werden, so dass das Werkstückteil beim Anheben zwischen Auflageelement und Saugeinrichtung geführt wird und dadurch ein Verkippen des Werkstücks vermieden werden kann. In vergleichbarer Weise kann auch ein entlang einer Hubachse höhenverstellbarer Stanzkopf, der an der Bearbeitungsposition angeordnet ist, bzw. ein am Stanzkopf oder am Stanzstempel angebrachter Niederhalter, z.B. in Form eines federnden Elements aus einem elastischen Material (z.B. Eladur), als Gegenhalter bzw. als Führung dienen und synchron zur Stanzmatrize eine Hubbewegung in die Entnahmeposition ausführen. Auch ein höhenverstellbarer Laserbearbeitungskopf bzw. ein an diesem vorgesehenes, typischerweise elastisches Fixierelement kann als Gegenhalter dienen. Es versteht sich, dass alternativ oder zusätzlich an der jeweiligen Bearbeitungsposition neben dem Stanzkopf bzw. Laserbearbeitungskopf eine separate, höhenverstellbare Fixiereinrichtung vorgesehen werden kann.

In einer weiteren bevorzugten Variante wird das Werkstückteil an der Entnahmeposition mittels einer Saugeinrichtung oder mittels eines Greifers entnommen. Das Werkstückteil kann hierbei mit der Saugeinrichtung zunächst in der Entnahmeposition gehalten werden, während das Auflageelement abgesenkt wird. Nach dem Absenken oder schon während des Absenkens des Auflageelements wird das Werkstückteil mit dem Saugrahmen z.B. in ein Magazin verbracht und so der Entnahmevorgang des Werkstückteils abgeschlossen. Alternativ kann das Werkstückteil in der Entnahmeposition mittels eines Greifers bzw. eines Greifarms entnommen werden. Mittels des Greifers kann jede Materialart (magnetisch, nicht magnetisch) entnommen werden. Der Greifer ist insbesondere auch zur Entnahme von Lochblechen geeignet, bei denen der Einsatz von Vakuum-Technik (Saugrahmen) problematisch beziehungsweise unmöglich ist.

Die Erfindung ist auch verwirklicht in einer Werkzeugmaschine gemäß Anspruch 7.

Bevorzugt umfasst die Werkzeugmaschine eine Entnahmeeinrichtung, insbesondere eine Saugeinrichtung oder einen Greifer, zur Entnahme des Werkstückteils an der Entnahmeposition. In der Entnahmeposition kann das zumindest teilweise über das Restwerkstück vorstehende Werkstückteil auf einfache Weise z.B. mittels eines Greifarms entnommen werden. Eine Saugeinrichtung ist zu diesem Zweck besonders vorteilhaft, da diese auch zur Führung des Werkstückteils während des Anhebens dienen kann.

Erfindungsgemäß umfasst die werkzeugmaschine mindestens eine Verschiebeeinrichtung zum Verschieben des Werkstückteils gemeinsam mit dem Restwerkstück auf der Werkstückauflage zum Positionieren des Werkstückteils auf dem Auflageelement. Die Verschiebeeinrichtung dient sowohl der Positionierung einer zu bearbeitenden Steile des Werkstücks an die ortsfeste Bearbeitungsposition als auch dem Positionieren des Werkstückteils auf dem Auflageelement nach dem Abschluss der trennenden Bearbeitung.

Erfindungsgemäß ist das Auflageelement an einer ortsfesten Bearbeitungsposition an der Werkstückauflage gebildet, um den Verschiebeweg des Werkstückteils in eine Auflageposition auf dem Auflageelement, bei dem das Werkstückteil das Auflageelement typischerweise vollständig überdeckt, möglichst klein zu halten.

In einer vorteilhaften Ausführungsform ist das Auflageelement eine Stanzmatrize oder eine Lasermatrize der Werkzeugmaschine, die mittels eines geeigneten Antriebs höhenverstellbar ist.

In einer weiteren bevorzugten Ausführungsform weist die Werkzeugmaschine eine Steuerungseinrichtung zum wahlweisen Anheben des Werkstückteils in einer Linearbewegung oder in einer Kippbewegung auf. Die Steuerungseinrichtung kann z.B. in Abhängigkeit von der Werkstückdicke und der Geometrie des zu entnehmenden Werkstkückteils zwischen beiden Bewegungsarten auswählen und das Werkstückteil relativ zum Auflageelement so positionieren, dass die gewünschte Bewegung beim Anheben des Auflageelements (in einer Linearbewegung) erfolgen kann. Für die Kippbewegung des Werkstückteils kann die Steuerungseinrichtung zusätzlich das Verbleiben von Verbindungsstegen zwischen Werkstückteil und Restwerkstück vorsehen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Es zeigen:

- Fig. 1: eine schematische Darstellung einer Ausführungsform einer erfindungsgemäßen Werkzeugmaschine,
- Fign. 2a-f: schematische Darstellungen mehrerer Schritte eines Entnahmevorgangs eines Werkstückteils aus der Werkzeugmaschine von Fig. 1, und
- Fign. 3a,b: schematische Darstellungen eines durch Verbindungsstege mit einem Restwerkstück in Verbindung stehenden Werkstückteils.

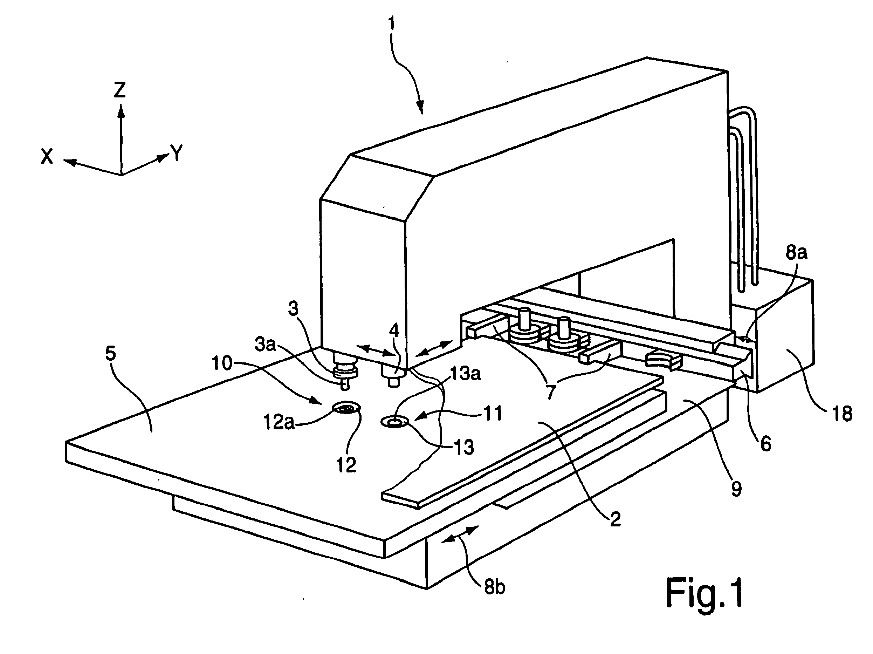

**Fig. 1** zeigt eine als Laser-Stanzpresse ausgebildete Werkzeugmaschine **1,** welche als Bearbeitungswerkzeuge zum trennenden Bearbeiten eines plattenförmigen Werkstücks **2** in Form eines Bleches einen herkömmlichen Stanzkopf 3 mit Stanzstempel **3a** und einen Laserbearbeitungskopf **4** aufweist. Das zu bearbeitende Werkstück 2 lagert während der Werkstückbearbeitung auf einer Werkstückauflage **5** in Form eines Bearbeitungstisches. Mittels einer herkömmlichen Halteeinrichtung **6,** welche Klemmen **7** zum Festhalten des Werkstücks **2** aufweist, kann das Werkstück 2 gegenüber dem Stanzstempel **3a** und dem Laserbearbeitungskopf 4 in der X-Richtung der Werkstückebene (X-Y-Ebene eines **XYZ-K**oordinatensystems) mittels eines durch einen Pfeil angegedeuteten konventionellen Linearantriebs **8a** verschoben werden. In der Y-Richtung der Werkstückebene kann das Werkstück 2 bewegt werden, indem die Werkstückauflage 5 zusammen mit der Halteeinrichtung 6 relativ zu einer Unterlage **9,** auf welcher die Werkstückauflage 5 gelagert ist, mittels eines durch einen Pfeil angedeuteten, herkömmlichen Linearantriebs **8b** verschoben wird.

Das Werkstück 2 lässt sich auf diese Weise in X- und Y-Richtung gegenüber dem Stanzstempel 3a und dem Laserbearbeitungskopf 4 verschieben, so dass der jeweils zu bearbeitende Bereich des Werkstücks 2 in einem ortsfesten Bearbeitungsbereich **10** des Stanzstempels **3a** bzw. einem ortsfesten Bearbeitungsbereich **11** des Laserbearbeitungskopfs 4 positioniert werden kann. Im Bearbeitungsbereich 10 des Stanzstempels 3 ist eine (auswechselbare) Stanzmatrize **12** positioniert, die eine Öffnung **12a** zum Eingriff für den (ebenfalls auswechselbaren) Stanzstempel 3a aufweist. Entsprechend ist in dem ortsfesten Bearbeitungsbereich 11 des Laserbearbeitungskopfs 4 eine Lasermatrize **13** angeordnet, welche als Öffnungsbegrenzung für eine im Wesentlichen kreisförmige Absaugöffnung **13a** in der Werkstückauflage 5 dient. Der Teilbereich der Werkstückauflage 5 in X-Richtung, an dem die Bearbeitungsbereiche 10, 11 gebildet sind, ist hierbei ortsfest und wird nicht in Y-Richtung relativ zur Unterlage 9 verschoben. Der Laserbearbeitungskopf 4 kann hierbei eine Bewegung in X- und Y-Richtung ausführen, welche durch die Absaugöffnung 13a begrenzt ist.

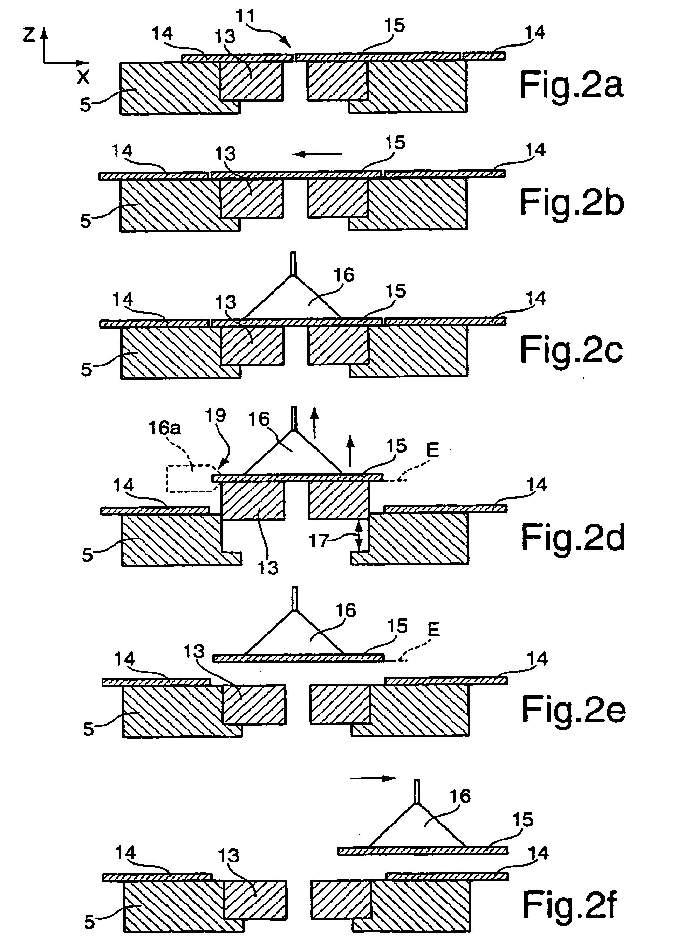

Nachdem wie oben dargestellt ein zu bearbeitender Bereich des Werkstücks 2 in den Bearbeitungsbereich 11 des Laserbearbeitungskopfs 4 verbracht wurde, wird letzterer aktiviert, um - wie in Fig. **2a** gezeigt ist - aus dem Werkstück 2 unter Bildung eines Restwerkstücks **14** ein beispielsweise rechteckiges Werkstückteil 15 vollständig freizuschneiden. Nach dem Freischneiden des Werkstückteils **15** ist dessen Außenkontur im Bearbeitungsbereich 11 angeordnet, so dass das Werkstückteil 15 mit seinem Schwerpunkt nicht auf der Lasermatrize 13 sondern auf der Werkstückauflage 5 aufliegt, von der in Fig. 2a nur der in Y-Richtung ortsfest bleibende Teilbereich gezeigt ist. Um das Werkstückteil 15 in einem in **Fign. 2b****-f** dargestellten Entnahmeprozess sicher aus dem Restwerkstück 14 entnehmen zu können, wird das Werkstückteil 15 zunächst so positioniert, dass dieses mit seinem Schwerpunkt über der als Auflageelement dienenden Lasermatrize 13 angeordnet ist. Zu diesem Zweck wird mittels des Linearantriebs 8a das Werkstückteil 15 gemeinsam mit dem Restwerkstück 14 in X-Richtung verschoben, wie in Fig. 2b durch einen Pfeil angedeutet ist. Es versteht sich, dass das Werkstückteil 15 auch in Y-Richtung geeignet positioniert werden kann, indem die Werkstückauflage 5 zusammen mit der Halterung 6 mittels des in Y-Richtung wirkenden Linearantriebs 8b verschoben wird.

Wie in Fig. 2c gezeigt ist, wird auf dem zentrisch oberhalb der Lasermatrize 13 positionierten Werkstückteil 15 ein Saugrahmen **16** eines Vakuumsaugers positioniert, der das Werkstückteil 15 ansaugt. Die höhenverstellbare Lasermatrize 13 wird nachfolgend mittels einer durch einen Doppelpfeil angedeuteten Hebeeinrichtung **17,** z.B. einem hydraulisch angetriebenen Hubzylinder, synchron mit dem Saugrahmen 16 angehoben, so dass das Werkstückteil bei der Hubbewegung zwischen der Lasermatrize 13 und dem Saugrahmen 16 geführt wird und ohne Gefahr des Verkippens in eine Entnahmeposition E oberhalb der Werkstückauflage 5 bzw. des Restwerkstücks 14 verbracht wird, vgl. Fig. 2d. Für die synchrone Steuerung der Bewegung des Saugrahmens 16 und der Lasermatrize 13 in Z-Richtung sowie zur Steuerung der Linearantriebe 8a, 8b in X- bzw. Y-Richtung ist in der Werkzeugmaschine 1 eine Steuerungseinrichtung **18** vorgesehen (vgl. Fig. 1). Die Steuerungseinrichtung 18 koordiniert hierbei die Bewegungen in X-, Y- und Z-Richtung der am Entnahmeprozess beteiligten Einrichtungen.

Nach der gemeinsamen Hubbewegung wird, wie in Fig. 2e dargestellt, die Lasermatrize 13 abgesenkt, bis sie mit ihrer Oberseite bündig mit der Oberseite der Werkstückauflage 5 abschließt. Hierbei wird das Werkstückteil 15 durch den Saugrahmen 16 in der Entnahmeposition E gehalten. Nachfolgend wird der Saugrahmen in X-Richtung verschoben (vgl. Fig. 2f), um den Entnahmeprozess abzuschließen und das Werkstückteil 15 in einem (nicht gezeigten) Magazin abzulegen.

Bei dem oben beschriebenen Entladevorgang wird das Werkstückteil 15 nach dem Freischneiden durch das Anheben der Lasermatrize 13 aus dem Restwerkstück 15 entnommen, d.h. der Entladevorgang wird aktiv durch das Anheben der Lasermatrize 13 unterstützt. Es versteht sich, dass anders als oben dargestellt das Werkstückteil 15 auch manuell an der Entnahmeposition E entnommen werden kann, da für einen Bediener das Werkstück dort gut zugänglich ist und in einem über die Lasermatrize 13 überstehenden Randbereich **19** gegriffen werden kann (vgl. Fig. 2d). Alternativ ist auch eine automatisierte Entnahme an der Entnahmeposition E mittels eines Greifers **16a** möglich, der das Werkstückteil 15 in dem Randbereich 19 umgreift, wie ebenfalls in Fig. 2d dargestellt ist. Insbesondere für eine manuelle Entnahme kann die Lasermatrize 13 mit dem aufliegenden Werkstückteil 15 auch ohne die Verwendung eines Saugrahmens 16 angehoben werden, wenn Werkstückteile entnommen werden sollen, deren Abmessungen nur unwesentlich größer als die von der Oberseite der Lasermatrize 13 gebildete Auflagefläche für das Werkstückteil 15 sind. Bei Werkstücken, deren Abmessungen deutlich über die horizontale Abmessung der Lasermatrize 13 hinausgehen, ist jedoch eine Führung des Werkstücks 15 zwischen Lasermatrize 13 und Saugrahmen 16 wie in Fign. 2c-f gezeigt vorteilhaft, da hierdurch ein Verkippen des Werkstückteils verhindert werden kann.

Es versteht sich, dass der oben beschriebene Entnahmevorgang auch stanzseitig vorgenommen werden kann, wenn die Stanzmatrize 12 höhenverstellbar ausgebildet ist. In diesem Fall kann zur Führung bzw. Fixierung des Werkstückteils 15 auf der Stanzmatrize 12 beim Anheben der in Fig. 1 gezeigte, entlang einer Hubachse (Z-Richtung) höhenverstellbare Stanzkopf 3 bzw. eine an diesem angebrachte FixierEinrichtung, z.B. ein Abstreifer, dienen. Der Stanzkopf 3 wird hierbei mittels eines herkömmlichen Linearantriebs angehoben, der unabhängig vom Linearantrieb der Stanzmatrize 12 ist, wobei die Synchronisation der beiden Antriebe mit Hilfe der Steuerungseinrichtung 18 erfolgt. Es versteht sich, dass alternativ oder zusätzlich auch eine Fixierung des Werkstückteils 15 mittels des Stanzstempels 3a bzw. eines an diesem vorgesehenen Niederhalters erfolgen kann. In entsprechender Weise ist auch eine Führung des Werkstückteils 15 mittels einer an der laserseitigen Bearbeitungsposition 11 vorgesehenen, höhenverstellbaren Führung möglich, die ggf. am Laserbearbeitungskopf 4 angebracht werden kann.

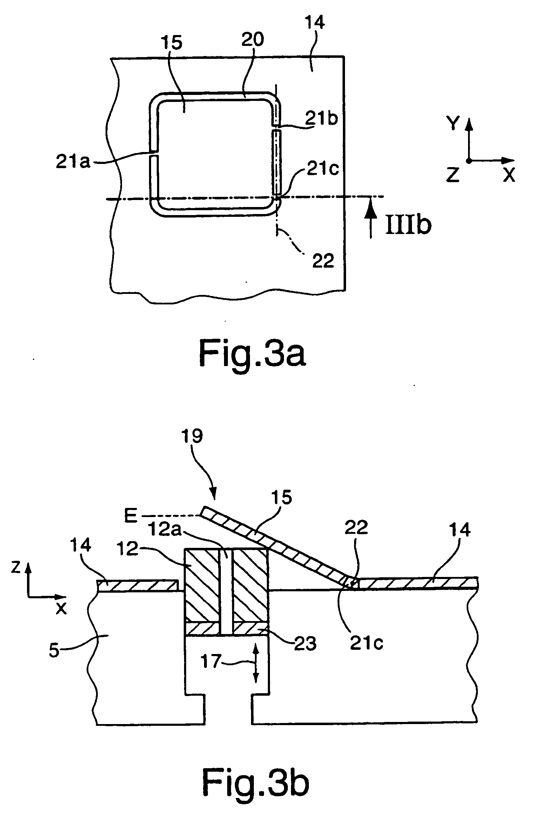

An Stelle einer Linearbewegung beim Anheben des Werkstückteils 13 kann auch eine Kippbewegung erfolgen, wie im Folgenden anhand von Fign. 3a**,b** beschrieben wird. Die Wahl, ob das Anheben des Werkstückteils 15 mit einer Kipp- oder einer Linearbewegung erfolgen soll, kann hierbei von einem Bediener oder von der Steuerungseinrichtung 18 in Abhängigkeit von Faktoren wie Werkstückdicke oder Werkstückgeometrie erfolgen und das Werkstückteil 15 in einer für die jeweilige Entnahmeart geeigneten Position auf dem Auflageelement angeordnet werden.

Fig. 3a zeigt eine Draufsicht auf das Werkstückteil 15, das durch einen beim Stanzen gebildeten Spalt **20** vom Restwerkstück 14 getrennt ist. Zwischen Werkstückteil 15 und Restwerkstück 14 sind beim Stanzen drei dünne Verbindungsstege **21a-c** verblieben, die auch als sog. "Micro-Joints" bezeichnet werden. Wie in Fig. 3b gezeigt, ist die Stanzmatrize 12 benachbart zu einem ersten Verbindungssteg 21a positioniert, der beim Anheben der auf einem höhenverstellbaren Matrizenhalter **23** angeordneten Stanzmatrize 12 durchbrochen wird. Bei der nachfolgenden Hubbewegung der Stanzmatrize 12 führt das Werkstückteil 15 eine Kippbewegung um eine Kippachse **22** aus, die entlang der zwei von der Stanzmatrize 12 weiter entfernten Verbindungsstege 21b, 21c verläuft, an denen das Werkstückteil 15 am Restwerkstück 14 gehalten wird. Durch die Kippbewegung wird das Werkstückteil 15 in eine Entnahmeposition E verbracht, an der es manuell von einem Bediener oder automatisiert mittels einer geeigneten Entnahmeeinrichtung, z.B. eines Greifarms, entnommen werden kann, da in der Entnahmeposition E ein Untergreifen eines Randbereichs 19 des Werkstückteils 15 erfolgen kann. Bei der manuellen oder automatisierten Entnahme des Werkstückteils 15 aus der Entnahmeposition E werden auch die beiden noch verbleibenden Verbindungsstege 21b, 21c durchbrochen und das Werkstückteil 15 vollständig vom Restwerkstück 14 getrennt.

Es versteht sich, dass nicht nur die Lasermatrize 13 bzw. die Stanzmatrize 12 als Auflageelemente für das zu entnehmende Werkstückteil 15 dienen können, sondern dass eines oder mehrere Auflageelemente auch an anderen Orten entlang der Werkstückauflage 5 angeordnet werden können. Die Verwendung einer Lasermatrize 13 bzw. einer Stanzmatrize 12, die zum Entnehmen eines Werkstückteils 15 über die Werkstückauflage 5 angehoben werden können, ist jedoch besonders günstig, da diese an der jeweiligen Bearbeitungsposition 10, 11 angeordnet sind, so dass in der Regel nur eine geringe Verschiebebewegung des Werkstückteils erforderlich ist, um dieses auf dem Auflageelement in eine für das Anheben geeignete Auflageposition zu verbringen.

## Patentansprüche

1. Verfahren zum Entnehmen eines durch trennendes Bearbeiten an einem plattenartigen, auf einer Werkstückauflage (5) einer Werkzeugmaschine (1) aufliegenden Werkstück (2) gebildeten Werkstückteils (15) aus einem Restwerkstück (14), welches sich nach dem mittels einer ortsfesten Bearbeitungseinrichtung (3,12;4,13) trennenden Bearbeiten mit dem Werkstückteil (15) in einer gemeinsamen, durch die Werkstückauflage (5) gebildeten Ebene befindet, umfassend:
Positionieren des Werkstückteils (15) auf einem Auflageelement (12, 13) durch Verschieben des Werkstückteils (15) gemeinsam mit dem Restwerkstück (14) auf der Werkstückauflage (5),
Anheben des Werkstückteils (15) an seiner Unterseite mittels des höhenverstellbaren Auflageelements (12, 13) zum Verbringen zumindest eines Randbereichs (19) des Werkstückteils (15) in eine Entnahmeposition (E) oberhalb des Restwerkstücks (14),
wobei das Auflageelement (12, 13) an einer ortsfesten Bearbeitungsposition (10, 11) der Werkstückauflage (5) gebildet wird, **dadurch gekennzeichnet, dass** während des Anhebens das Werkstückteil (15) mittels einer an der Bearbeitungsposition (10, 11) vorgesehenen höhenverstellbaren Fixiereinrichtung in Form eines höhenverstellbaren Stanzkopfs (3) oder eines höhenverstellbaren Laserbearbeitungskopfs (4) auf dem Auflageelement (12, 13) gehalten wird.

2. Verfahren nach Anspruch 1, bei dem das Auflageelement von einer Stanzmatrize (12) oder einer Lasermatrize (13) der Werkzeugmaschine (1) gebildet wird.

3. Verfahren nach einem der vorhergehenden Ansprüche, bei dem das Anheben des Werkstückteils (15) in die Entnahmeposition (E) wahlweise mit einer Linearbewegung oder mit einer Kippbewegung erfolgt.

4. Verfahren nach einem der vorhergehenden Ansprüche, bei dem beim trennenden Bearbeiten Verbindungsstege (21 a-c) zwischen Werkstückteil (15) und Restwerkstück (14) verbleiben, von denen mindestens einer beim Anheben des Werkstückteils (15) durchbrochen wird.

5. Verfahren nach einem der vorhergehenden Ansprüche, bei dem das Werkstückteil (15) beim Anheben um eine Kippachse (22) verkippt wird, die entlang eines oder mehrerer beim trennenden Bearbeiten zwischen Werkstückteil (15) und Restwerkstück (14) verbliebenen Verbindungsstegen (21 b,c) verläuft.

6. Verfahren nach einem der vorhergehenden Ansprüche, bei dem das Werkstückteil (15) an der Entnahmeposition (E) mittels einer Saugeinrichtung (16) oder mittels eines Greifers (16a) entnommen wird, welcher das Werkstückteil (15) an dem über das Auflageelement (12, 13) überstehenden Randbereich (19) umgreift.

7. Werkzeugmaschine (1), umfassend:
eine Werkstückauflage (5) zur Auflage eines plattenartigen Werkstücks (2), sowie eine ortsfeste Bearbeitungseinrichtung (3, 12; 4, 13) zur Trennung des Werkstücks (2) in ein Werkstückteil (15) und ein Restwerkstück (14) in einer gemeinsamen, durch die Werkstückauflage (5) gebildeten Ebene,
mindestens ein höhenverstellbares Auflageelement (12, 13) zum Anheben zumindest eines Randbereichs (19) des Werkstückteils (15) in eine Entnahmeposition (E) oberhalb des Restwerkstücks (14),
wobei das Auflageelement (12, 13) an einer ortsfesten Bearbeitungsposition (10, 11) der Werkstückauflage (5) gebildet ist,
eine Verschiebeeinrichtung (8a) zum Verschieben des Werkstückteils (15) gemeinsam mit dem Restwerkstück (14) auf der Werkstückauflage (5) zum Positionieren des Werkstückteils (15) auf dem Auflageelement (12, 13), sowie eine mittels der Verschiebeeinrichtung (8a) linear verschiebbare Halteeinrichtung (6), welche Klemmen (7) zum Festhalten des Werkstücks (2) aufweist, **dadurch gekennzeichnet, dass** die Werkzeugmaschine (1) ausgebildet ist, eine an der Bearbeitungsposition (10, 11) vorgesehene höhenverstellbare Fixiereinrichtung in Form eines höhenverstellbaren Stanzkopfs (3) oder eines höhenversteilbaren Laserbearbeitungskopfs (4) während des Anhebens des Werkstückteils (15) synchron mit dem Auflageelement (12, 13) in die Entnahmeposition (E) anzuheben.

8. Werkzeugmaschine nach Anspruch 7, bei welcher zur Erleichterung der Verschiebung des Werkstückteils (15) und des Restwerkstücks (14) an der Werkstückauflage (5) Gleitrollen angebracht sind.

9. Werkzeugmaschine nach Anspruch 7 oder 8, weiter umfassend: eine Entnahmeeinrichtung, insbesondere eine Saugeinrichtung (16) oder einen Greifer (16a), zur Entnahme des Werkstückteils (15) an der Entnahmeposition (E).

10. Werkzeugmaschine nach Anspruch 9, bei welcher der Greifer (16a) zum Umgreifen des Werkstückteils (15) an dem über das Auflageelement (12, 13) überstehenden Randbereich (19) ausgebildet ist.

11. Werkzeugmaschine nach einem der Ansprüche 7 bis 10, bei dem das Auflageelement eine Stanzmatrize (12) oder eine Lasermatrize (13) ist.

12. Werkzeugmaschine nach einem der Ansprüche 7 bis 11, weiter umfassend eine Steuerungseinrichtung (18) zum wahlweisen Anheben des Werkstückteils (15) in die Entnahmeposition (E) mit einer Linearbewegung oder mit einer Kippbewegung.

13. Werkzeugmaschine nach einem der Ansprüche 7 bis 12, bei welchem der höhenverstellbare Stanzkopf (3) oder ein an diesem angebrachter Stanzstempel (3a) als Gegenhalter für das Werkstückteil (15) einen Niederhalter aufweist, insbesondere in Form eines federnden Elements aus elastischem Material.

14. Werkzeugmaschine nach einem der Ansprüche 7 bis 13, bei welchem an dem höhenverstellbaren Laserbearbeitungskopf (4) ein insbesondere elastisches Fixierelement als Gegenhalter für das Werkstückteil (15) vorgesehen ist.

## Claims

1. Method for removing a workpiece part (15), formed by separative machining of a plate-like workpiece (2) supported on a workpiece support (5) of a machine tool (1), from a residual workpiece (14), which, after separative machining using a stationary processing device (3, 12; 4, 13), is located in a common plane with the workpiece part (15), the plane being formed by the workpiece support (5), comprising:
positioning the workpiece part (15) on a support element (12, 13) by displacing the workpiece part (15) together with the residual workpiece (14) on the workpiece support (5)
lifting the workpiece part (15) on its lower side using the height-adjustable support element (12, 13) for moving at least an edge area (19) of the workpiece part (15) into a removal position (E) above the residual workpiece (14),
wherein the support element (12, 13) is formed at a stationary processing position (10, 11) of the workpiece support (5), **characterized in that** during lifting the workpiece part (15) is held on the support element (12, 13) by means of a height-adjustable fixing device provided at the processing position (10, 11) in the form of a height-adjustable punching head (3) or a height-adjustable laser processing head (4).

2. Method according to claim 1, wherein the support element is formed by a punching die (12) or a laser die (13) of the machine tool (1).

3. Method according to any one of the preceding claims, wherein the workpiece part (15) is lifted to the removal position (E) selectively by a linear movement or by a tilting movement.

4. Method according to any one of the preceding claims, wherein during separative machining, connecting webs (21a-c) remain between the workpiece part (15) and the residual workpiece (14), of which at least one is broken when the workpiece part (15) is lifted.

5. Method according to any one of the preceding claims, wherein during lifting the workpiece part (15) is tilted about a tilting axis (22) which extends along one or more connecting webs (21b, c) that remain between the workpiece part (15) and the residual workpiece (14) during separative machining.

6. Method according to any one of the preceding claims, wherein the workpiece part (15) is removed at the removal position (E) by a suction device (16) or a gripper (16a), which surrounds the workpiece part (15) in the edge area (19) that projects beyond the support element (12, 13).

7. Machine tool (1), comprising:
a workpiece support (5) for supporting a plate-like workpiece (2), and a stationary processing device (3, 12; 4, 13) for separation of the workpiece (2) to obtain a workpiece part (15) and a residual workpiece (14) in a common plane formed by the workpiece support (5),
at least one height-adjustable support element (12, 13) for lifting at least an edge area (19) of the workpiece part (15) to a removal position (E) above the residual workpiece (14),
wherein the support element (12, 13) is formed at a stationary processing position (10, 11) of the workpiece support (5),
a displacement device (8a) for displacing the workpiece part (15) together with the residual workpiece (14) on the workpiece support (5) for positioning the workpiece part (15) on the support element (12, 13) as well as a holding device (6) which can be linearly displaced by means of the displacement device (8a) and comprises clamps (7) for retaining the workpiece (2), **characterized in that**
the machine tool (1) is designed for lifting a height-adjustable fixing device in the form of a height-adjustable punching head (3) or a height-adjustable laser processing head (4) which is provided at the processing position (10, 11) synchronously with the support element (12, 13) to the removal position (E) during lifting of the workpiece part (15).

8. Machine tool according to claim 7, wherein slide rollers are mounted to the workpiece support (5) for facilitating displacement of the workpiece part (15) and of the residual workpiece (14).

9. Machine tool according to claim 7 or 8, further comprising a removal device, in particular, a suction device (16) or a gripper (16a) for removing the workpiece part (15) at the removal position (E).

10. Machine tool according to claim 9, wherein the gripper (16a) for surrounding the workpiece part (15) is formed in the edge area (19) that projects beyond the support element (12, 13).

11. Machine tool according to any one of the claims 7 to 10, wherein the support element is a punching die (12) or a laser die (13).

12. Machine tool according to any one of the claims 7 to 11, further comprising a control device (18) for lifting the workpiece part (15) to the removal position (E) selectively by a linear movement or by a tilting movement.

13. Machine tool according to any one of the claims 7 to 12, wherein the height-adjustable punching head (3) or a punch (3a) mounted thereto has a holding down device as a counter support for the workpiece part (15), in particular, in the form of a resilient element of elastic material.

14. Machine tool according to any one of the claims 7 through 13, wherein an, in particular, elastic fixing element is provided on the height-adjustable laser processing head (4) as a counter support for the workpiece part (15).

## Revendications

1. Procédé pour enlever une partie de pièce usinée (15), formée par usinage de séparation sur une pièce du genre plaque (2) reposant sur un support de pièce (5) d'une machine-outil (1), d'une pièce résiduelle (14) qui, à la suite de l'usinage de séparation au moyen d'un dispositif d'usinage stationnaire (3, 12 ; 4, 13), se trouve avec la partie de pièce usinée (15) dans un plan commun formé par le support de pièce (5), comprenant les étapes suivantes :
positionnement de la partie de pièce usinée (15) sur un élément d'appui (12, 13), en déplaçant la partie de pièce usinée (15) conjointement avec la pièce résiduelle (14) sur le support de pièce (5),
soulèvement de la partie de pièce usinée (15) sur le dessous au moyen de l'élément d'appui (12, 13) réglable en hauteur, afin d'amener au moins une région de bord (19) de la partie de pièce usinée (15) dans une position d'enlèvement (E) au-dessus de la pièce résiduelle (14),
sachant que l'élément d'appui (12, 13) est formé à une position d'usinage stationnaire (10, 11) du support de pièce (5),
**caractérisé en ce que**, pendant le soulèvement, la partie de pièce usinée (15) est maintenue sur l'élément d'appui (12, 13) au moyen d'un dispositif de fixation en position réglable en hauteur prévu à la position d'usinage (10, 11) et se présentant sous la forme d'une tête de découpage (3) réglable en hauteur ou d'une tête d'usinage laser (4) réglable en hauteur.

2. Procédé selon la revendication 1, selon lequel l'élément d'appui est formé par une matrice de découpage (12) ou une matrice laser (13) de la machine-outil (1).

3. Procédé selon l'une des revendications précédentes, selon lequel le soulèvement de la partie de pièce usinée (15) dans la position d'enlèvement (E) s'effectue au choix par un mouvement linéaire ou par un mouvement de basculement.

4. Procédé selon l'une des revendications précédentes, selon lequel, lors de l'usinage de séparation, des nervures de liaison (21a-c) restent présentes entre la partie de pièce usinée (15) et la pièce résiduelle (14), nervures dont au moins une est brisée lors du soulèvement de la partie de pièce usinée (15).

5. Procédé selon l'une des revendications précédentes, selon lequel la partie de pièce usinée (15) est, lors du soulèvement, basculée autour d'un axe de basculement (22) qui s'étend le long d'une ou plusieurs nervures de liaison (21b-c) restées présentes entre la partie de pièce usinée (15) et la pièce résiduelle (14) lors de l'usinage de séparation.

6. Procédé selon l'une des revendications précédentes, selon lequel la partie de pièce usinée (15) est enlevée à la position d'enlèvement (E) au moyen d'un organe aspirant (16), ou au moyen d'un preneur (16a) qui s'engage autour de la partie de pièce usinée (15) au niveau de la région de bord (19) dépassant de l'élément d'appui (12, 13).

7. Machine-outil (1), comprenant :
un support de pièce (5) pour recevoir une pièce du genre plaque (2),
ainsi qu'un dispositif d'usinage stationnaire (3, 12 ; 4, 13) pour séparer la pièce (2) en une partie de pièce usinée (15) et une pièce résiduelle (14) dans un plan commun formé par le support de pièce (5),
au moins un élément d'appui (12, 13) réglable en hauteur pour soulever au moins une région de bord (19) de la partie de pièce usinée (15) dans une position d'enlèvement (E) au-dessus de la pièce résiduelle (14),
sachant que l'élément d'appui (12, 13) est formé à une position d'usinage stationnaire (10, 11) du support de pièce (5),
un dispositif de translation (8a) pour déplacer la partie de pièce usinée (15) conjointement avec la pièce résiduelle (14) sur le support de pièce (5) afin de positionner la partie de pièce usinée (15) sur l'élément d'appui (12, 13),
et un dispositif de maintien (6), qui peut être déplacé linéairement au moyen du dispositif de translation (8a) et qui présente des organes de serrage (7) pour maintenir bloquée la pièce (2),
**caractérisée en ce que** la machine-outil (1) est conçue pour, pendant le soulèvement de la partie de pièce usinée (15), soulever de manière synchrone avec l'élément d'appui (12, 13) dans la position d'enlèvement (E) un dispositif de fixation en position réglable en hauteur prévu à la position d'usinage (10, 11) et se présentant sous la forme d'une tête de découpage (3) réglable en hauteur ou d'une tête d'usinage laser (4) réglable en hauteur.

8. Machine-outil selon la revendication 7, dans laquelle des galets de glissement sont installés sur le support de pièce (5) afin de faciliter le déplacement de la partie de pièce usinée (15) et de la pièce résiduelle (14).

9. Machine-outil selon la revendication 7 ou 8, comprenant en outre : un dispositif d'enlèvement, en particulier un organe aspirant (16) ou un preneur (16a), pour enlever la partie de pièce usinée (15) à la position d'enlèvement (E).

10. Machine-outil selon la revendication 9, dans laquelle le preneur (16a) est conçu pour s'engager autour de la partie de pièce usinée (15) au niveau de la région de bord (19) dépassant de l'élément d'appui (12, 13).

11. Machine-outil selon l'une des revendications 7 à 10, dans laquelle l'élément d'appui est une matrice de découpage (12) ou une matrice laser (13).

12. Machine-outil selon l'une des revendications 7 à 11, comprenant en outre un dispositif de commande (18) pour soulever au choix la partie de pièce usinée (15) dans la position d'enlèvement (E) par un mouvement linéaire ou par un mouvement de basculement.

13. Machine-outil selon l'une des revendications 7 à 12, dans laquelle la tête de découpage (3) réglable en hauteur ou un poinçon de découpage (3a) installé sur celle-ci présente un serre-flan comme contre-appui pour la partie de pièce usinée (15), en particulier sous la forme d'un élément à effet de ressort en matériau élastique.

14. Machine-outil selon l'une des revendications 7 à 13, dans laquelle un élément de fixation en position notamment élastique est prévu comme contre-appui pour la partie de pièce usinée (15) sur la tête d'usinage laser (4) réglable en hauteur.
